# EUROPÄISCHE PATENTSCHRIFT

(11) **EP 2 427 930 B1**
(45) Veröffentlichungstag und Bekanntmachung des Hinweises auf die Patenterteilung: **05.10.2016**
(21) Anmeldenummer: 10720722.7
(22) Anmeldetag: 10.05.2010
(51) Int. Cl.: H01M 8/2475, H01M 8/241, H01M 8/04007, H01M 8/04014

(54) **BRENNSTOFFZELLENANORDNUNG**
FUEL CELL SYSTEM
ENSEMBLE PILE À COMBUSTIBLE

(30) Priorität: 08.05.2009 DE 102009021057; 22.05.2009 DE 102009022946
(43) Veröffentlichungstag der Anmeldung: 14.03.2012
(73) Patentinhaber: Fraunhofer-Gesellschaft zur Förderung der angewandten Forschung e.V., 80686 München (DE)
(72) Erfinder: HAHN, Robert, 13156 Berlin (DE); KUNDE, Christian, 39104 Magdeburg (DE)
(74) Vertreter: Pfenning, Meinig & Partner mbB
(86) Internationale Anmeldenummer: PCT/EP2010/003040
(87) Internationale Veröffentlichungsnummer: WO 2010/127881

(56) Entgegenhaltungen:
- EP-A1- 1 381 104
- DE-A1-102007 007 704
- DE-A1-102007 036 477
- US-A- 5 906 898
- US-A1- 2003 012 986
- US-A1- 2005 130 007
- US-A1- 2007 072 051

## Beschreibung

Gegenstand der vorliegenden Erfindung ist eine Brennstoffzellenanordnung nach dem Oberbegriff des Anspruchs 1.

Im Stand der Technik sind im Wesentlichen zwei Aufbauvarianten von Brennstoffzellen bekannt. Dies betrifft zum einen gestapelten Brennstoffzellen (Brennstoffzellenstacks), welche eine erste Luftpumpe zur Kathodenversorgung sowie einen weiteren Lüfter zur Luftkühlung oder einen Flüssigkühlkreislauf für die Kühlung der Brennstoffzellen selbst besitzen. Ein Beispiel für eine derartige Brennstoffzellenanordnung ist die US 6 503 650 B1. Die dort gezeigte Anordnung besitzt einen Wasserkreislauf, welcher unter anderem die Brennstoffzellen selbst kühlt. Um eine Belüftung der Kathode zu garantieren, weist die Brennstoffzellenanordnung eine Belüftungseinheit mit zwei Lüftern auf, welche einen Gasstrom in die Kathode einer Brennstoffzelle in unterschiedliche Richtungen blasen bzw. saugen können. Zu diesem Zweck kann ein Gasstromteiler in seiner Stellung variiert werden um die entsprechende Luftverteilung zu finden. Dabei wird der Gasstrom in einem durch den Gasstromteiler definierten Bereich angesaugt oder durch die Kathode geblasen. Durch Einstellen der Stärke des blasenden bzw. saugenden Gasstroms wird sichergestellt, dass die für die Wirkungsweise der Brennstoffzelle wichtige Feuchtigkeit der Kathodenseite nicht vollständig aus der Kathode ausgetragen wird. Zugleich wird jedoch darauf geachtet, dass genügend Frischluft an die Kathode gelangt. Nachteil dieser Anordnung, ist der komplizierte Aufbau und der energieintensive Betrieb der Brennstoffzellenanordnung.

Ein weiteres Beispiel einer Struktur für einen effizienten Gasaustausch ist aus der US 2006/0269821 A1 bekannt. Hierbei weist der Brennstoffzellenstack an einer seiner Seiten einen auf einer Seite geschlossenen Gaskanal auf, an welchem sich Kathodenkanalöffnungen derart anschließen, dass die in den Gaskanal eingeführte Luft vollständig durch die Kathodenkanäle ausgeblasen wird und so einen Gasaustausch an den Kathoden bewirkt. Nachteil dieser Anordnung ist es, dass der Gaskanal zur Führung des Gasstromes, welcher anschließend in die Kathodenkanäle geleitet wird, schwach sein muss, so dass keine Feuchtigkeit aus den Kathodenkanälen ausgetragen wird und so die Effizienz der Brennstoffzellenanordnung nicht herabgesetzt wird.

Diese aktiven Systeme sind nur ab einer Mindestleistung von ca. 10 Watt geeignet, da sonst die Peripheriekomponenten, d. h. die Lüfter oder die Kühlkomponenten nicht mehr in der notwendigen Miniaturisierung verfügbar sind, im Verhältnis zur Leistungsdichte zu starke Kosten verursachen, die Zuverlässigkeit des Systems herabsetzen bzw. selbst zuviel Energie verbrauchen.

Die zweite grundsätzliche Aufbauvariante ist die einer planaren völlig passiven Brennstoffzelle, bei welchen der Reaktandenaustausch an der Kathode allein durch natürliche Konvektion erfolgt.

Derartige Brennstoffzellen werden bevorzugt in möglichst kleinen miniaturisierten Systemen eingesetzt. Nachteil an derartigen Brennstoffzellen ist jedoch die starke Begrenzung der Leistungsdichte und die Abhängigkeit von den Umgebungsbedingungen.

Aufgabe der vorliegenden Erfindung ist es, die Nachteile eines aktiven Systems zu reduzieren und gleichzeitig ein kleines kostengünstiges System zu schaffen, welches eine höhere Leistungsdichte als eine passive Brennstoffzelle erlaubt.

Die Aufgabe wird mittels einer Brennstoffzellenanordnung nach den Merkmalen des Anspruchs 1 gelöst. Vorteilhafte Weiterbildungen werden in den abhängigen Ansprüchen beschrieben.

Die Erfindung betrifft eine Brennstoffzellenanordnung mit einem Gehäuse mit einer ersten Querschnittsfläche senkrecht zu einer Stackrichtung, einem in dem Gehäuse angeordneten Brennstoffzellenstack mit mindestens einer Brennstoffzelle, welche in der Stackrichtung nacheinander angeordnet eine Anode, eine Ionenaustauscheinheit und eine Kathode umfasst, wobei die Brennstoffzelle einen aktiven Bereich mit einer zweiten Querschnittsfläche senkrecht zur Stackrichtung aufweist, welche kleiner als die erste Querschnittsfläche ist, senkrecht zur Stackrichtung in einer ersten Richtung verlaufende Kathodenkanäle als Separatorstruktur zum kathodenseitigen Gasaustausch angeordnet sind, und einer Belüftungseinheit, wobei ein erster zwischen der mindestens einen Brennstoffzelle und dem Gehäuse in einer zweiten Richtung verlaufender Kühlkanal mit einem Einlass und einem Auslass vorhanden ist und die Kathodenkanäle mit dem ersten Kühlkanal verbunden sind. Außerdem ist ein zweiter zwischen der mindestens einen Brennstoffzelle und dem Gehäuse in der zweiten Richtung verlaufender Kühlkanal mit einem Einlass und einem Auslass vorhanden. Durch eine derartige Anordnung ist es möglich, jeweils einen Gasstrom durch den ersten bzw. zweiten Kühlkanal zu schicken, welcher am Einlass eingeführt und am Auslass ausgeführt wird. Da der erste Kühlkanal mit dem zweiten Kühlkanal mittels der Separatorstruktur verbunden ist, kann im Falle, dass im ersten Kühlkanal ein anderer Druck, insbesondere statischer Druck im Sinne Bernoullis, als im zweiten Kühlkanal vorliegt, ein Gasstrom entlang der Separatorstruktur bewirkt werden, welcher lediglich aufgrund der unterschiedlichen Drücke im ersten und im zweiten Kühlkanal zustande kommt. Diese Anordnung weist gegenüber dem Stand der Technik große Vorteile auf: Zum einen ist es möglich, mit relativ starken Gasströmen eine Kühlung der Brennstoffzellen entlang der Kühlkanäle zu bewirken. Um zugleich einen Gasaustausch an der Separatorstruktur zu bewirken, welcher aufgrund der an der Kathode vorhandenen und verbleibenden Feuchtigkeit jedoch wesentlich schwächer ausgebildet sein muss als der Gasstrom zum Kühlen der Brennstoffzellenanordnung, werden die Gasströme bzw. die Bemessungen des ersten und zweiten Kühlkanals bzw. deren Ein- oder Auslässe derart gewählt, dass in beiden ein unterschiedlicher statischer Druck vorliegt. Die Druckdifferenz zwischen dem ersten und dem zweiten Kühlkanal bewirkt dann einen Gasstrom, welcher deutlich schwächer als der Kühlgasstrom ist.

Die Kathodenkanäle können hierbei so ausgeführt sein, dass ihr Eingang und Ausgang im Kühlkanal münden oder dass nur der Eingang mit dem Kühlkanal verbunden ist, während der Ausgang offen bleibt und am Gehäuse mündet.

Eine Weiterbildung sieht vor, dass die Anode mindestens einen ersten Anodenstromableiter aufweist bzw. dass die Kathode mindestens einen ersten Kathodenstromableiter aufweist. Die Anoden- oder Kathodenstromableiter ragen in einen Kühlkanal. In bevorzugten Ausführungsformen können Bipolarplatten der Brennstoffzelle in den Kühlkanal ragen und sind in diesem Bereich dünner ausgebildet bzw. besitzen in diesem Bereich nicht Stege in y-Richtung, mit denen die Kathodenkanäle ausgebildet werden. Dadurch entstehen Kanäle in x-Richtung.

Kathodenseitig ist vorzugsweise eine Struktur angeordnet, über die sauerstoffhaltiges Gas zur Kathode führbar ist und/oder über die eine elektrische Ankontaktierung an die Kathode gewährleistet ist.

Diese Struktur kann beispielsweise eine kathodenseitige Separatorstruktur sein. Eine solche Struktur ist sehr kostengünstig, beispielsweise aus Kunststoffen im Spritzgussverfahren, herstellbar.

Eine andere Möglichkeit sieht vor, dass dies beispielsweise eine herkömmliche Bipolarplatte ist.

Es können hier prinzipiell (je nach Bauart) verschiedenartige Platten zwischen den Brennstoffzellen angeordnet sein. Bauartbedingt können diese mit benachbarten Teilen elektrisch verbunden sein oder auch elektrisch isoliert sein. Wichtig ist hier allerdings eine gute thermische Anbindung an die benachbarten Brennstoffzellen, damit eine gute Wärmeableitung zu den Kühlkanälen hin möglich ist.

Vorzugsweise kann ein Lüfter auch nur mit einem einzigen (also dem ersten oder dem zweiten) Kanal verbunden sein, eine Ankopplung an beide Kanäle ist selbstverständlich auch möglich.

Die Erfindung eignet sich für Brennstoffzellen unterschiedlicher Bauarten, beispielsweise für DMFC oder PEMFC.

Im Folgenden werden weitere Aspekte der Erfindung beschrieben.

Die erfindungsgemäße Brennstoffzellenanordnung weist einen in einem Gehäuse gehaltenen Brennstoffzellenstack auf. Der Brennstoffzellenstack weist dabei zumindest eine Brennstoffzelle auf, welche in einer Stackrichtung betrachtet nacheinander angeordnet eine Anode mit vorzugsweise mindestens einem ersten Anodenstromableiter, eine Ionenaustauscheinheit sowie eine Kathode mit vorzugsweise einem ersten Kathodenstromableiter und vorzugsweise mindestens einer ersten kathodenseitigen Separatorstruktur umfasst.

In der Stackrichtung betrachtet weist das Gehäuse eine erste Querschnittsfläche auf. Die mindestens eine Brennstoffzelle umfasst einen aktiven Bereich, welcher eine zweite Querschnittsfläche besitzt, wobei der aktive Bereich oftmals durch die in der Stackrichtung betrachtete Querschnittsfläche der Ionenaustauscheinheit begrenzt ist. Der aktive Bereich weist eine zweite Querschnittsfläche auf, welcher kleiner als die erste Querschnittsfläche ist. Hierdurch ergibt sich das der Brennstoffzellenstack einen Teil der ersten Querschnittsfläche nicht überdeckt. Unter dem Begriff "aktiver Bereich" ist derjenige Bereich zu verstehen, an welchem die elektrochemische Reaktion stattfindet.

Entlang des aktiven Bereichs weist vorzugsweise eine Separatorstruktur bzw. weisen Kathodenkanäle in einer ersten Richtung, welche senkrecht zur Stackrichtung verlaufen kann, Leitstrukturen auf, welche dem kathodenseitigen Gasaustausch dienen. Als Separatorstruktur kommen insbesondere Strukturen in Betracht wie sie beispielsweise in der Druckschrift WO 2008/098791 A2 offenbart wurden. Dies bedeutet, dass die Separatorstruktur zum einen genau definiert verlaufende Kanäle aufweisen kann, jedoch auch lediglich durch einzelne Zapfen an den verbleibenden Elementen der Brennstoffzelle, insbesondere Teilen der Anode, abgestützt ist und somit Kanäle nicht eindeutig definierten Verlaufs aufweist. Als Materialien für eine derartige Separatorstruktur kommen beispielsweise Kunstharze, Gewirke aus Kunststoffen oder Ähnliches in Frage, wie bereits in der WO 2008/098791 A2 beschrieben, alternativ auch typische Bipolarplattenmaterialien wie Graphit, gefüllte Kunststoffe oder Metall.

Erfindungsgemäß weist die Brennstoffzellenanordnung einen ersten und einen zweiten zwischen der mindestens einen Brennstoffzelle und dem Gehäuse in einer zweiten Richtung verlaufenden Kühlkanal auf. Hierbei verläuft der erste bzw. zweite Kühlkanal insbesondere in einem Teilbereich der ersten Querschnittsfläche, welcher nicht durch den aktiven Bereich überdeckt wird. Die zweite Richtung kann dabei parallel zur Stackrichtung oder senkrecht zu dieser verlaufen. Bevorzugt verläuft die zweite Richtung jedoch senkrecht zur ersten Richtung. Sowohl der erste als auch der zweite Kühlkanal, welcher entlang des Brennstoffzellenstacks in der zweiten Richtung laufen, weisen einen Einlass und einen Auslass auf. Durch den Einlass und den getrennten Auslass kann ein Gasstrom durch den jeweiligen Kühlkanal geleitet werden.

Zudem verbindet die Separatorstruktur den ersten und den zweiten Kühlkanal, wobei die Verbindung derart ist, dass ein Gasstrom vom ersten Kühlkanal zum zweiten Kühlkanal bzw. umgekehrt verlaufen kann. Um den Gasaustausch zwischen dem ersten und dem zweiten Kühlkanal entlang der Separatorstruktur zuzulassen, muss die Verbindung weitere Öffnungen aufweisen, welche nicht mit dem zum Ein- und Auslass identisch sind.

Als Belüftungseinheit kommt hier beispielsweise ein aktiver Lüfter in Frage, welcher aktiv Luft oder ein anderes Sauerstoff enthaltendes Gas in den jeweiligen Einlass des ersten oder zweiten Kühlkanals einbläst bzw. aus dem Auslass des ersten und zweiten Kühlkanals absaugt. Hierbei ist es möglich, in einer Ausführungsform der Brennstoffzellenanordnung lediglich einen Lüfter für sowohl den ersten als auch den zweiten Kühlkanal zu verwenden.

In einer anderen Ausführungsform ist es möglich, keinen aktiven Lüfter einzusetzen, sondern die natürliche Konvektion durch einen für den ersten und zweiten Kühlkanal gemeinsamen Einlass zu wählen, wobei aufgrund eines passiven Stromteilers die unterschiedlichen Drücke im ersten und zweiten Kühlkanal hergestellt werden. Auf diese Weise könnte beispielsweise der Fahrtwind eines Fahrzeugs zur Kühlung genutzt werden. Um zugleich die Kühlung und den Gasaustausch entlang der Kathode zu bewirken, müssen lediglich Druckdifferenzen im ersten und im zweiten Kühlkanal vorliegen, welche aufgrund verschiedener baulicher Maßnahmen herbeigeführt werden können.

In einer ersten Ausführungsform ist die Belüftungseinheit so eingerichtet und wird die Differenz zwischen dem ersten Druck und dem zweiten Druck derart gewählt, dass der Gasstrom durch die mindestens eine Separatorstruktur um einen Faktor 5 und 1000 kleiner als der Gasstrom durch den ersten oder zweiten Kühlkanal ist. Hierdurch wird gewährleistet, dass der durch den Kühlkanal geführte Gasstrom ausreichend stark zur Kühlung der Brennstoffzellen ist, wobei der durch die Separatorstruktur geführte Gasstrom lediglich dem Gasaustausch dient und keine Austrocknung der Kathode bewirkt. Zugleich wird jedoch gewährleistet, dass genügend Frischluft bzw. Gas an der Kathode zur Verfügung steht um die an der Ionenaustauscheinheit vorliegende Reaktion aufrecht zu erhalten.

In einer weiteren Ausführungsform ragt der mindestens eine erste Kathodenstromableiter oder der mindestens eine erste Anodenstromableiter in den ersten und/oder zweiten Kühlkanal. Durch eine Verlängerung der Stromableiter, insbesondere des Kathodenstromableiters, in den Kühlkanal selbst kann eine besonders effiziente Kühlung der Brennstoffzelle durch einen in den Kühlkanälen geführten Gasstrom erreicht werden. Hierbei bieten sich insbesondere gut wärmeleitende Metalle wie beispielsweise Kupfer oder Aluminium an.

Die Stromableiter können vom aktiven Bereich bis an den inneren Rand des Gehäuses ragen um so eine optimale Kühlung des Brennstoffzellenstacks zu bewirken. Zugleich kann die Geometrie der Bereiche der Stromableiter, welche in den Zwischenraum zwischen dem aktiven Bereich und der zweiten Querschnittsfläche ragen, derart gewählt werden, dass ein unterschiedlicher statischer Druck im ersten und zweiten Kühlkanal bewirkt wird und somit die Druckdifferenz zum Gasaustausch entlang der Separatorstruktur genutzt wird.

Außer metallischen Stromableitern können Verlängerungen der Brennstoffzellenplatten selbst (Graphit, Metall) in den Bereich des Kühlkanals verlängert werden. Wichtig ist eine ausreichende Wärmeleitfähigkeit und Dicke, um die Verlustwärme sicher abführen zu können. Außerdem ist die Höhe des aktiven Bereichs der Brennstoffzelle in y-Richtung so anzupassen, dass die durch Wärmeableitung in y-Richtung entstehende Temperaturvariation nicht zu groß wird (kleiner einiger Kelvin). Im Allgemeinen wird deshalb die Brennstoffzelle eher in y-Richtung schmaler und dafür in x-Richtung länger sein.

In einer weiteren Ausführungsform sind der erste und der zweite Kühlkanal derart angeordnet, dass sie entlang der zweiten Richtung betrachtet auf zwei sich gegenüberliegenden Seiten des Brennstoffzellenstacks angeordnet sind. Auf diese Weise kann nebst dem statischen Druck auch noch der Schweredruck des Gases dazu benutzt werden, um einen zusätzlichen Anteil beim Gasstrom durch die Separatorstruktur zu stellen.

In einer weiteren Ausführungsform ist die senkrecht zur zweiten Richtung verlaufende Querschnittsfläche des ersten Kühlkanals größer als eine Querschnittsfläche des zweiten Kühlkanals. Die Querschnittsfläche der Kühlkanäle stellt eine besonders einfache Möglichkeit dar, unterschiedliche statische Drücke im ersten und im zweiten Kühlkanal herzustellen.

Eine weitere Möglichkeit wird durch eine weitere Ausführungsform gegeben, bei welcher der Einlass des ersten Kühlkanals und der Einlass des zweiten Kühlkanals bzw. der Auslass des ersten Kühlkanals und der Auslass des zweiten Kühlkanals jeweils unterschiedlich bemessen sind und die unterschiedlichen Druckverhältnisse so herbeigeführt werden. Eine weitere Möglichkeit, unterschiedliche Drücke im ersten und im zweiten Kühlkanal zu bewirken, besteht darin, den Gasstrom im ersten Kühlkanal als schneller gegenüber dem Gasstrom im zweiten Kühlkanal auszubilden. Auch hierdurch wird ein unterschiedlicher statischer Druck zwischen dem ersten und dem zweiten Kühlkanal und dementsprechend ein Gasstrom in der Separatorstruktur aufgebaut.

In einer weiteren Ausführungsform ist es möglich, den Einlass des zweiten Kühlkanals mit dem Auslass des ersten Kühlkanals zu verbinden, wobei beispielsweise aufgrund der Bemessungen des Auslasses oder des Einlasses oder der Querschnittsfläche der Kühlkanäle ein Druckunterschied im ersten und zweiten Kühlkanal und somit ein Gasstrom in der Separatorstruktur bewirkt wird.

In einer weiteren Ausführungsform weist der Einlass und/oder der Auslass des ersten bzw. zweiten Kühlkanals Mittel zur Verstellung einer Größe der Querschnittsfläche des Einlasses oder des Auslasses auf, so dass das Verhältnis der im Kühlkanal vorliegenden Drücke variabel, gegebenenfalls stufenlos verstellt werden kann. Hierdurch kann auf unterschiedliche Arbeitsbedingungen stufenlos oder gestuft reagiert werden.

Eine Verstellung kann eine Vergrößerung oder Verkleinerung der Querschnittsfläche umfassen. Dazu kann beispielsweise eine Vorrichtung vorgesehen sein, durch die Platten, die die Öffnung des Kühlkanals teilweise überdecken, vor diese Öffnung gefahren werden bzw. von der Öffnung entfernt werden.

In einer weiteren Ausführungsform weist die Belüftungseinheit genau einen Lüfter auf, welcher sowohl den Gasstrom im ersten als auch den Gasstrom im zweiten Kühlkanal bewirkt. Dabei kann der Lüfter symmetrisch oder asymmetrisch zum ersten und zweiten Einlass bzw. Auslass angeordnet sein, wobei auf die bereits beschriebenen Möglichkeiten zum Erzeugen unterschiedlicher Drücke im ersten und im zweiten Kühlkanal zurückgegriffen werden kann.

Um die Leistung der Brennstoffzellenanordnung zu erhöhen, ist vorzugsweise eine Vielzahl von Brennstoffzellen vorhanden, wobei es sich bei den Brennstoffzellen bevorzugt um eine Bi-Brennstoffzelle handelt. Auch hierzu wird auf die Offenbarung der WO 2008/098791 A2 verwiesen.

Nachfolgend soll die Erfindung anhand einiger Darstellungen erläutert werden. Insbesondere können einzelne Merkmale der Anordnungen für sich genommen mit anderen Ausführungsformen kombiniert werden.

Es zeigen:
- Figur 1: Brennstoffzellenstack nach dem Stand der Technik;
- Figur 2a,b: weitere Brennstoffzellenanordnung nach dem Stand der Technik;
- Figur 3a-d: Ausführungsvariante einer erfindungsgemäßen Brennstoffzellenanordnung;
- Figur 4: schematisch Wirkungsweise einer erfindungsgemäßen Brennstoffzellenanordnung;
- Figur 5: Ersatzschaltbild einer erfindungsgemäßen Brennstoffzellenanordnung;
- Figur 6: schematische Übersicht über einstellbare Gasstromverhältnisse im Kühlkanal und in der Separatorstruktur;
- Figur 7a-c: schematische Darstellung von Bipolarplatten und Kathodenkanälen;
- Figur 8a-e: verschiedene Konfigurationen von Kühlkanälen und Lüftern;
- Fig. 9-14b): Diagramme zur Erläuterung quantitativer Zusammenhänge der Erfindung.

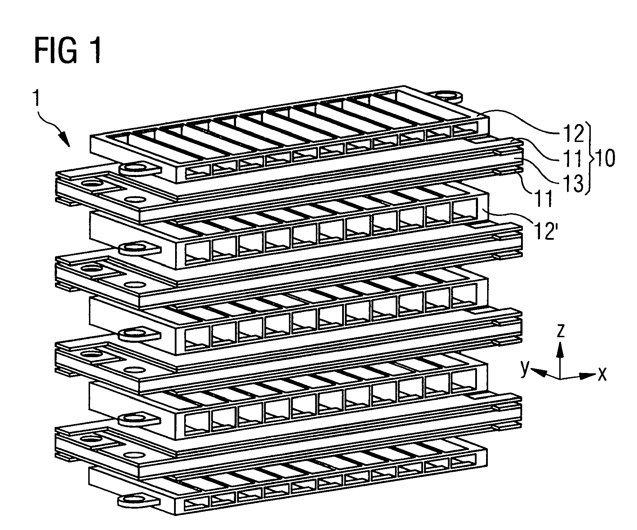

Die Figur 1 zeigt einen Brennstoffzellenstack 1, wie er beispielsweise in der WO 2008/098791 A2 offenbart ist. Der Brennstoffzellenstack 1 weist eine Vielzahl von Brennstoffzellen 10 auf, welche im vorliegenden Beispiel als Bi-Brennstoffzellen ausgeführt sind. Die Brennstoffzellen sind entlang der Stackrichtung z gestapelt. Die Bi-Brennstoffzelle weist eine Brennstoffverteilerstruktur 13, einen Kathodenstromableiter 11 und eine Separatorstruktur 12 auf. Dabei ist in z-Richtung betrachtet jeweils auf beiden Seiten der Brennstoffverteilerstruktur 13 ein Kathodenstromableiter 11 angeordnet. Gleiches gilt für die Separatorstrukturen 12 und 12' .

Bereits aus der Figur 1 ist erkennbar, dass die Separatorstruktur 12 entlang einer ersten Richtung y verlaufende Kanäle aufweist, welche zum kathodenseitigen Gasaustausch dienen. An den jeweils in x-Richtung liegenden Rändern der Brennstoffverteilerstruktur sind Brennstoffzufuhranschlüsse als auch Teile des Kathodenstromableiters sichtbar. Die genaue Funktionsweise ist aus dem Stand der Technik bekannt.

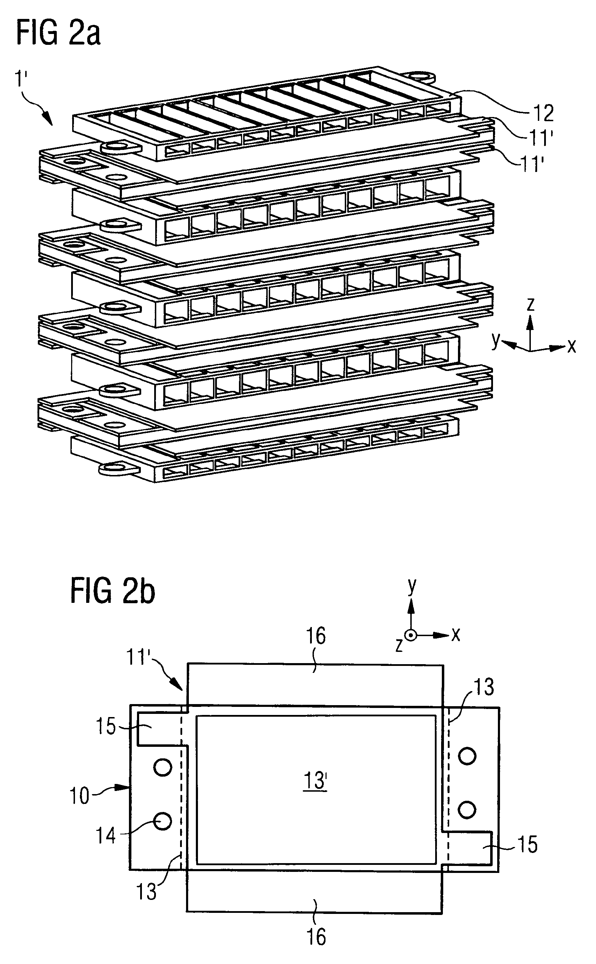

In der Figur 2a ist eine Variante eines Brennstoffzellenstacks 1' dargestellt. Im Gegensatz zum Brennstoffzellenstack 1 weist der Brennstoffzellenstack 1' veränderte Kathodenstromableiter 11' auf. Hierbei sind die Kathodenstromableiter in der ersten Richtung y über die Brennstoffverteilerstruktur 13 hinweg verlängert. Dies wird anhand der Figur 2b deutlicher. Die Figur 2b zeigt die Brennstoffverteilerstruktur 13 mit einer daraufgelegten, d. h. in z-Richtung gestapelten Kathodenstromableiter 11'. Es ist deutlich erkennbar, dass in y-Richtung betrachtet der Kathodenstromableiter 11' sich über einen aktiven Bereich 13', welcher durch die gestrichelten Linien der Brennstoffverteilerstruktur 13 begrenzt wird, in y-Richtung hinweg erstreckt. Da der Kathodenstromableiter über den aktiven Bereich 13' der Brennstoffzelle 10 ragt, kann ein auf die Verlängerung 16' treffender Gasstrom zur Kühlung der Brennstoffzelle 10 beitragen.

Des Weiteren sollen noch die Brennstoffverteilerzugänge 14 als auch das Stromkontaktierfeld 15 des Kathodenstromableiters 11' erwähnt werden, über welche der in der Brennstoffzelle erzeugte Strom abgeführt werden kann.

Der in der Figur 2a dargestellte Brennstoffzellenstack 1' weist vier Bi-Brennstoffzellen auf. Bei Bedarf können selbstverständlich mehr Bi-Brennstoffzellen in der aus dem Stand der Technik bekannten Anordnung in Stackrichtung z hinzugefügt werden. Auch ist es möglich, lediglich gewöhnliche Brennstoffzellen zu verwenden, wobei dann eine einfachere Brennstoffverteilerstruktur 13 gewählt werden kann, welche insbesondere nur auf einer Seite eine Ionenaustauscheinheit aufweist.

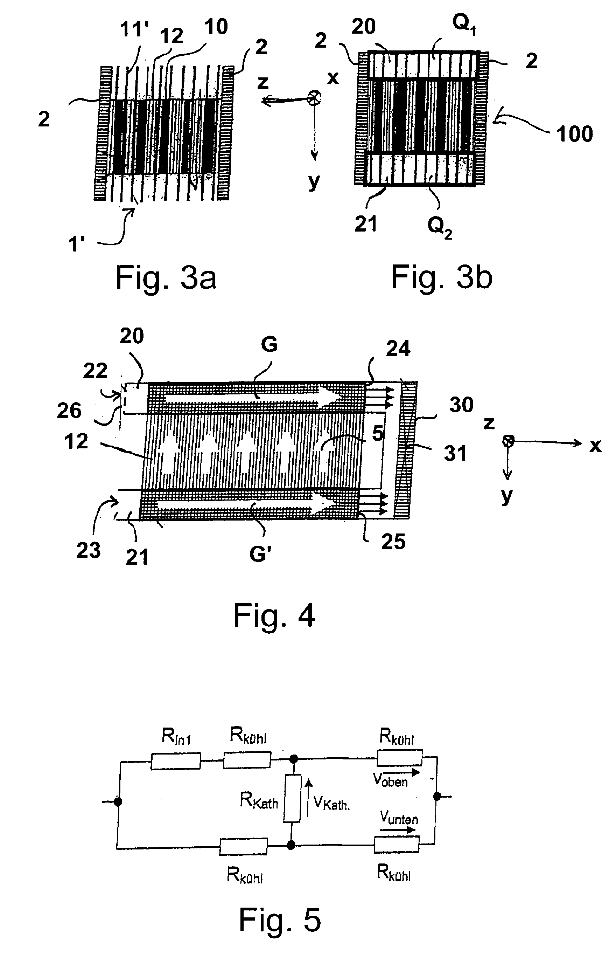

Anhand der Figuren 3a bis d soll eine Ausführungsvariante einer erfindungsgemäßen Brennstoffzellenanordnung erläutert werden. In der Figur 3a ist der in der Figur 2a dargestellte Brennstoffzellenstack 1' in anderer Orientierung gezeigt. Dabei wird der Brennstoffzellenstack mit einem Gehäuse 2 abgedeckt, bei welchem insbesondere die den Brennstoffzellenstack 1' in z-Richtung begrenzenden Endplatten des Gehäuses 2 gezeigt sind. Anhand der Darstellung der Figur 3a ist ersichtlich, dass die Kathodenstromableiter 11' wie in den Figuren 2a und 2b dargestellt, über den aktiven Bereich der Brennstoffzelle 10 hinausragen. Insbesondere sind abwechselnd eine Brennstoffverteilerstruktur 13 und eine Separatorstruktur 12 dargestellt.

In der Figur 3b ist zusätzlich eine obere und untere Abdeckung des Brennstoffzellenstack 1' dargestellt. Hierdurch wird das Gehäuse 2 der Brennstoffzellenanordnung 100 abgeschlossen. Hierdurch werden ein erster Kühlkanal 20 und ein zweiter Kühlkanal 21, welche sich entlang der zweiten Richtung x erstrecken, definiert. Dabei weist der erste Kühlkanal 20 eine Querschnittsfläche Q₁ auf, wobei zu berücksichtigen ist, dass der Querschnitt der Kathodenstromableiter 11' nicht zum Querschnitt Q₁ des Kühlkanals 20 beiträgt. Selbiges gilt für die Querschnittsfläche Q₂ des zweiten Kühlkanals 21. Hierbei ist zu beachten, dass die Querschnittsfläche Q₁ kleiner als die Querschnittsfläche Q₂ ist.

Die Stackrichtung der Brennstoffzellenanordnung 100 ist die z-Richtung. Die erste Richtung entlang welcher die Kanäle der Separatorstruktur verlaufen, ist die y-Richtung. Die zweite Richtung entlang welcher sich der erste und der zweite Kühlkanal erstrecken, ist die x-Richtung.

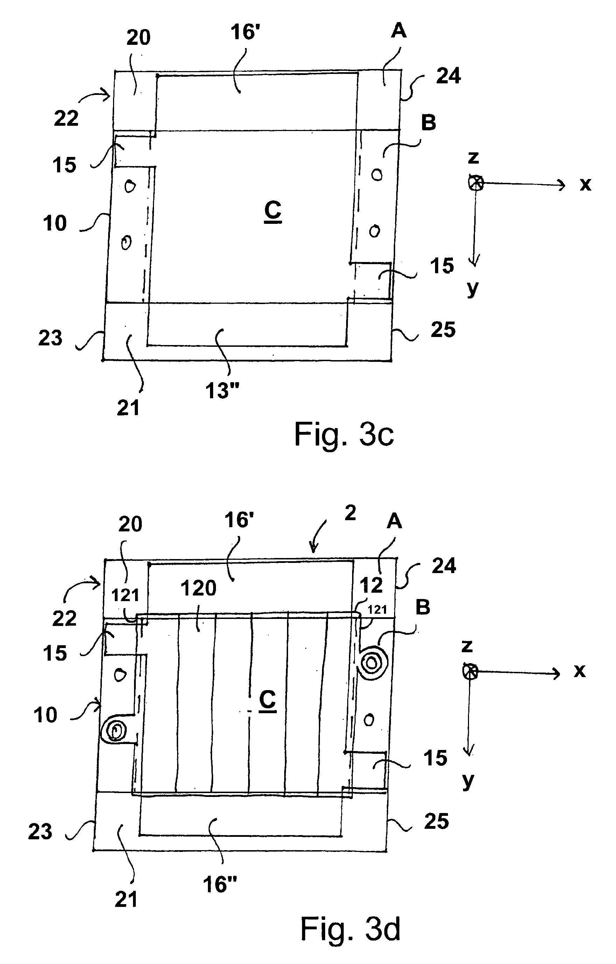

In der Figur 3c ist ein Querschnitt entlang der x-y-Ebene der Figur 3b gezeigt.

Gegenüber der Darstellung der Figur 2b ist nunmehr auch das Gehäuse 2 der Brennstoffzellenanordnung dargestellt. In dieser Darstellung weist das Gehäuse 2 eine erste Querschnittsfläche A auf. Die Brennstoffverteilerstruktur 13 der Brennstoffzelle 10 nimmt eine Querschnittsfläche B ein, wobei die Differenz zwischen der Querschnittsfläche B und der Querschnittsfläche A im Wesentlichen die Querschnittsfläche der Kühlkanäle 20 bzw. 21 bildet. Der aktive Bereich der Brennstoffzelle 10 weist eine Querschnittsfläche C auf, welche ebenfalls kleiner ist als die Querschnittsfläche A. Zusätzlich ist ein Einlass 22 des ersten Kühlkanals 20 erkennbar. Analog hierzu weist der zweite Kühlkanal 21 ebenfalls einen Einlass 23 und einen Auslass 25 auf. Zudem ist erkennbar, dass der Kathodenstromableiter mit einem Bereich 16' in den ersten Kühlkanal 20 ragt. Dabei erstreckt sich der Kathodenstromableiter über eine x-Richtung gemessene Breite von der Brennstoffverteilerstruktur 13 bis zum Rand des Gehäuses 2. Ein in den zweiten Kühlkanal 21 ragender Bereich 16" füllt nur einen Teilbereich der Brennstoffverteilerstruktur und dem Rand des Gehäuses aus. Wird nun in den Einlass 22 bzw. den Einlass 23 ein Gasstrom gleicher Geschwindigkeit eingeführt, wobei die Einlässe 22 und 23 sowie die Auslässe 24 und 25 die gleiche Größe aufweisen, baut sich aufgrund der in der y-z-Ebene betrachteten kleineren Querschnittsfläche Q₁ des ersten Kühlkanals 20 entlang des Querschnittes Q₁ ein höherer statischer Druck als im zweiten Kühlkanal 21 auf. Da, wie in der Figur 3d gezeigt, aufgrund der Separatorstruktur 12 und der darin angeordneten Kanäle 120 eine Verbindung zwischen dem ersten Kühlkanal 20 und dem zweiten Kühlkanal 21 hergestellt wird, entsteht ein Gasstrom entlang der Kanäle 120, wobei die Geschwindigkeit bzw. die Intensität des Gasstroms von der Druckdifferenz zwischen dem ersten Kühlkanal 20 und dem zweiten Kühlkanal 21 abhängt.

Ein wesentliches Element der Brennstoffzellenanordnung ist es also, dass Einlass und Auslass des ersten bzw. zweiten Kühlkanals zusätzlich zur Verbindung zwischen dem ersten und dem zweiten Kühlkanal vorliegen. Auf diese Weise können durch den ersten und den zweiten Kühlkanal jeweils starke zur Kühlung geeignete Gasströme geführt werden, wobei gleichzeitig aufgrund einer sich ausbildenden Druckdifferenz zwischen dem ersten und dem zweiten Kühlkanal ein wesentlich kleinerer Gasstrom entlang der Kanäle 120 der Separatorstruktur 12 bewirkt wird.

In dem in der Figur 3c dargestellten Beispiel wird die Druckdifferenz zwischen dem ersten Kühlkanal 20 und dem zweiten Kühlkanal 21 dadurch hergestellt, dass der Kathodenstromableiter 11" unterschiedlich weit in den jeweiligen Kühlkanal ragt. Hierdurch unterscheidet sich die in der z-y-Ebene betrachtete Querschnittsfläche der Kühlkanäle. Es ist jedoch selbstverständlich ebenfalls möglich, den ersten Kühlkanal größer oder kleiner als den zweiten Kühlkanal 21 auszubilden und eine Druckdifferenz aufgrund einer gleichen Menge eingeführten Gases zu erzeugen. Mit einer derartigen Anordnung wäre es ebenfalls möglich, lediglich einen Gasstrom in den Einlass 22 zu führen, durch den Auslass 24 auszuführen und anschließend in den Auslass 25 des zweiten Kühlkanals 21 einzuführen und durch den Einlass 23 des zweiten Kühlkanals 21 wieder auszuführen. Aufgrund unterschiedlicher Querschnittsflächen käme es dennoch zu einer Druckdifferenz zwischen dem ersten und dem zweiten Kühlkanal, so dass ein Gasstrom entlang der Kanäle 120 ausgeprägt würde. Bei dieser Variante ist jedoch die Kühlleistung gegenüber zwei in gleicher Richtung verlaufenden Gasströmen in den Kühlkanälen verringert.

Anhand der Figur 4 soll auf weitere Möglichkeiten zum Erzeugen einer Druckdifferenz zwischen dem ersten und dem zweiten Kühlkanal eingegangen werden. Die in der z-y-Ebene betrachteten Querschnittsflächen des ersten und des zweiten Kühlkanals 20,21 sind identisch. Ebenfalls ist der Querschnitt der Auslässe 24 und 25 identisch. Jedoch ist der Einlass 22 vom Querschnitt her kleiner als der Einlass 23, wobei sowohl dem Einlass 22 als auch dem Einlass 23 eine identische Menge Gas pro Fläche zugeführt wird. Dies wird mittels der Belüftungseinrichtung 30, welche genau einen Lüfter aufweist, bewirkt. Aufgrund dessen, dass durch den Einlass 22 eine geringere Menge an Gas angesaugt wird, entsteht ein Druckunterschied zwischen dem ersten Kühlkanal 20 und dem zweiten Kühlkanal 21. Der aufgrund der unterschiedlichen Geschwindigkeiten entstehende Druckunterschied zwischen dem zweiten Kühlkanal 21 und dem ersten Kühlkanal 20 bewirkt das Entstehen eines Gasstroms S in der Separatorstruktur 12.

Um eine bessere Steuerung der Gasströme G, G' sowie S zu bewirken, kann an dem Einlass 22 eine Vorrichtung 26 zur selektiven Vergrößerung oder Verkleinerung der Querschnittsfläche des Einlasses angeordnet werden. Hierdurch wird ein zusätzlicher Strömungswiderstand variabel ausgebildet, wobei durch die Variierung der Querschnittsfläche des Einlasses 22 eine genaue Steuerung des Gasstroms S möglich wird.

Dies ist in dem Ersatzschaltbild der Figur 5 verdeutlicht. Die verringerte Querschnittsfläche des Einlasses 22 bewirkt das Hinzuschalten eines zusätzlichen Widerstandes Rᵢₙ₁. Da der Strömungswiderstand in den restlichen Bereichen des ersten Kühlkanals 20 und des zweiten Kühlkanals 21 mit R_{kühl} jeweils identisch ist, fließt über den Widerstand der kathodenförmigen Separatorstruktur Rₖₐₜₕ ein Strom vom zweiten Kühlkanal 21 zum oberen Kühlkanal 20. Dies wird durch die Geschwindigkeit vₖₐₜₕ illustriert. Aus dem Ersatzschaltbild ist ebenso klar, dass die Gasströmgeschwindigkeit v_{oben} des ersten Kühlkanals 20 sich nur gering von der Gasstromgeschwindigkeit vᵤₙₜₑₙ des zweiten Kühlkanals 21 unterscheidet.

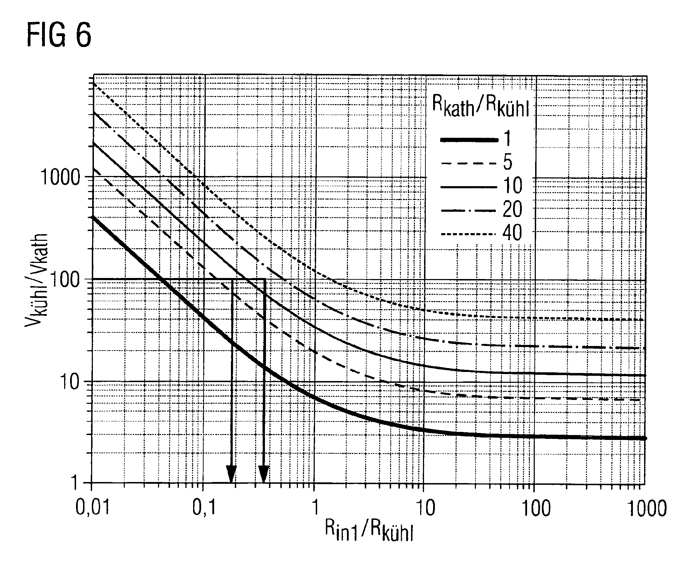

In diesem Lichte sind auch die Angaben der Figur 6 zu interpretieren. In der Figur 6 sind verschiedene Verhältnisse zwischen den Ersatzwiderständen Rₖₐₜₕ und R_{kühl} dargestellt. Dabei ist das Verhältnis zu Rₖₐₜₕ zu R_{kühl} indirekt proportional zur Querschnittsfläche an den Kühlkanälen und den kathodenseitigen Kanälen. Auf der Abszisse des Graphen ist das Verhältnis des Einlasswiderstandes Rᵢₙₗ zum Widerstand R_{kühl} aufgezeigt. Auf der Ordinate ist das Verhältnis des Gasstroms durch die Kühlkanäle zum Gasstrom durch die Separatorstruktur dargestellt. Das heißt, dass die "1000" auf der Ordinate bedeutet, dass der Gasstrom durch den Kühlkanal 1000x stärker als der Gasstrom durch die Separatorstruktur ist. Um eine effizienten Betrieb der Brennstoffzellenanordnung zu gewährleisten ist es sinnvoll, dass Verhältnis des Gasstroms der Kühlkanäle zum Gasstrom der Separatorstruktur zwischen 5 und 1000 auszubilden. Anhand der Figur 6 soll nun beispielhaft erläutert werden, wie das Verhältnis des Einlasswiderstands und des Widerstands des Kühlkanals bei einem Gasstromverhältnis von 100 zueinander eingestellt werden. Beträgt das Verhältnis des Widerstand Rₖₐₜₕ zu R_{kühl} 5, ist der Widerstand R_{kühl} 10x größer als der Einlasswiderstand Rᵢₙ₁. Ist das Verhältnis von Rₖₐₜₕ zu R_{kühl} 20, beträgt das Verhältnis 7:10.

Bei den in der Figur 5 und 6 gemachten Ausführungen ist jeweils eine saugende Belüftungseinrichtung, welche am Auslass angeordnet ist, zugrunde gelegt, wobei ein Einlass eine geringere Querschnittsfläche aufweist. Bei einer geänderten Anordnung, beispielsweise bei einem Lüfter, welcher an den Einlässen blasend angeordnet ist, verändern sich die Werte analog. Die Querschnittsabmessungen der Kathoden und Kühlkanäle liegen in der Größe zwischen 1x1 und typisch 2x2 mm. Die Länge der Kathoden beträgt am Kühlkanal zwischen 0,5 und 20 cm, typischerweise zwischen 1 bis 10 cm.

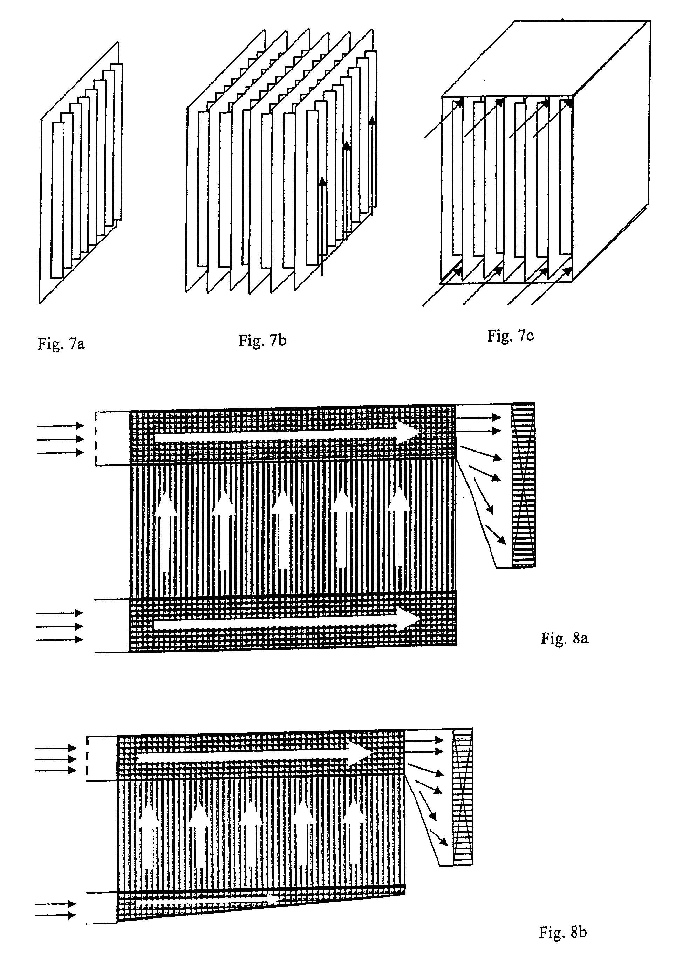

Figur 7a zeigt eine schematische Darstellung einer Bipolarplatte, diese weist eine Plattenebene mit einem vorliegend im Wesentlichen rechteckigen Flächenbereich auf, auf dem rechts Stege eingezeichnet sind, die die kathodenseitigen Luftkanäle darstellen sollen. Auf der abgewandten Seite (nicht sichtbar in Figur 7a) sind die anodenseitigen Kanäle und die eigentliche Brennstoffzelle (Gasdiffusionslagen, MEA) angeordnet.

Figur 7b zeigt einen Stapel von Bipolarplatten und Brennstoffzellen. Es entstehen dadurch senkrechte Luftkanäle in y-Richtung (s. Pfeile in Figur 7b).

Figur 7c zeigt durch Anordnung eines Deckels oben und unten entstandene Luftkanäle in x-Richtung (s. Pfeile in Figur 7c), die zur Kühlung dienen und auch für den Luftstrom in den Kathoden sorgen. Die Wärmeleitfähigkeit der Bipolplatten bzw. des Materials der Brennstoffzelle, welches bis in den Bereich der Kühlkanäle hineinragt, muss eine ausreichende Wärmeleitfähigkeit in y-Richtung besitzen. Insofern wird auf die DE 103 06 081 A1 verwiesen, wobei die Wärmeleitung in x-Richtung beschrieben wird.

Im Folgenden werden weitere Konfigurationen schlagwortartig beschrieben.

Figur 8a zeigt, wie die Luft nur über die oberen Kühlkanäle angesaugt wird. Dadurch kann man eine höhere Strömungsgeschwindigkeit in den senkrechten Kathodenkanälen erhalten, falls der Strömungswiderstand in den Kühlkanälen groß ist im Vergleich zum Widerstand in den Kathodenkanälen. Die Kühlwirkung in den oberen Kühlkanälen ist dabei größer als in den unteren. Bei guter thermischer Leitfähigkeit der Materialien sind die Temperaturvariationen in der Brennstoffzelle aber gering.

In Figur 8b erfolgt die hauptsächliche Kühlung nur durch den oberen Kühlkanal. Der untere Kanal ist so geformt, dass er vor allem eine gleichmäßige Aufteilung der Luft in den einzelnen Kathodenkanälen bewirkt. Dies kann, wie hier gezeigt, trapezförmig, aber auch mit beliebigen Kurvenformen ausgeführt werden.

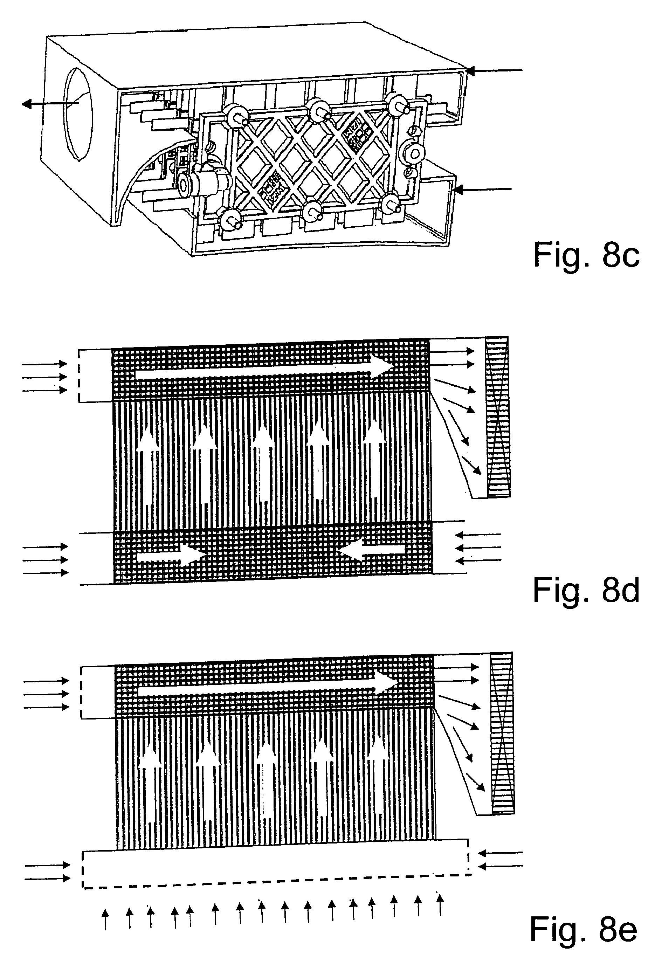

Figur 8c zeigt eine Realisierung entsprechend Figur 8b, wobei die Luftrichtung aber von rechts nach links eingezeichnet ist. Im Ansaugbereich des Lüfters ist eine gekrümmte Wand verwendet, um einen homogenen Luftstrom im oberen Kühlkanal zu erzeugen, obwohl der Lüfter unsymmetrisch angeordnet ist.

Figur 8d zeigt eine Variante zur in der Figur 8a dargestellten Konfiguration, in der der Lüfter nur an den oberen Kühlkanal angeschlossen ist. In diesem Fall kann die Luft unten auch von beiden Seiten angesaugt werden.

Figur 8e zeigt eine Variante zu Figur 8d, bei der die Luft auch über den gesamten unteren Bereich des Stacks angesaugt werden kann.

Im Folgenden werden Messergebnisse beschrieben.

Es wurde ein Modell für eine Brennstoffzelle aufgestellt und die Feuchte bzw. Temperatur als Funktion des Brennstoffzellenstroms und der Lüfterleistung berechnet und messtechnisch verifiziert. Dabei wird vor allem das Wassermanagement der PEM-Brennstoffzelle betrachtet. Da das Feuchteaufnahmevermögen der Luft exponentiell mit der Temperatur ansteigt, kann es bei zu hohen Temperaturen und hohen Luftströmungen in den Kathodenkanälen leicht zu einem Austrocknen der Brennstoffzellenmembranen kommen.

Die Brennstoffzelle besteht aus 10 Einzelzellen mit einer aktiven Fläche von jeweils 10 cm² (5 x 2 cm²). Die Höhe der Kühlkanäle beträgt 10 mm und besteht aus verlängerten Stromableitern aus Aluminiumblech.

Das Querschnittsverhältnis der Kanäle der Kathoden und der Kühlkanäle ist so gewählt, dass durch die Kühlkanäle ca. 25-mal mehr Luft strömt.

Im Fall des theoretisch maximalen Wärmeübergangs von der Brennstoffzelle zur Kühlluft, also wenn die Kühlluft bis auf die Kerntemperatur der Brennstoffzelle erhitzt werden könnte, müsste ein minimales Verhältnis von 3:1 zwischen Kühlluft und Kathodenluft eingestellt werden. Je schlechter die Wärmeübertragung auf die Luft ist, desto höher muss das Verhältnis gewählt werden.

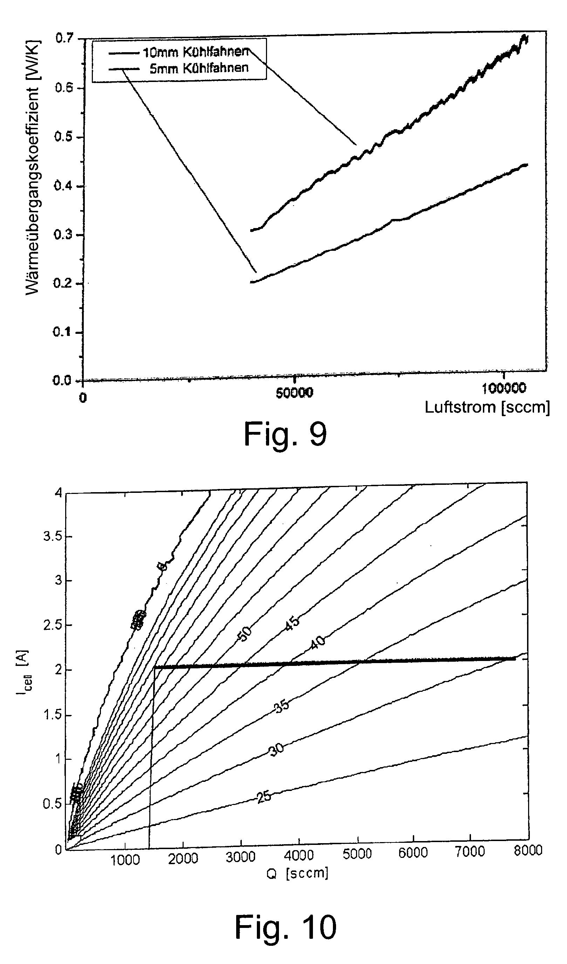

Figur 9 zeigt den gemessenen Wärmeübergangskoeffizienten der Gesamtanordnung für 5 mm und 10 mm hohe Kühlbleche bzw. Kühlkanäle. Mit diesem Wärmeübergangskoeffizienten wurden die Berechnungen durchgeführt.

Figur 10 zeigt die Temperatur als Funktion des Zellstroms des Luftstroms in den Kathodenkanälen. Die Luftmenge in den Kühlkanälen ist entsprechend 25-mal größer. Die Umgebungstemperatur beträgt 25 °C. Bei einem Strom von 2 Ampere werden somit ca. 1400 sccm (Milliliter pro Minute) Luftstrom in den Kathodenkanälen bzw. 35 Liter pro Minute Gesamtluftstrom benötigt, um die Stacktemperatur unter 70 °C zu halten.

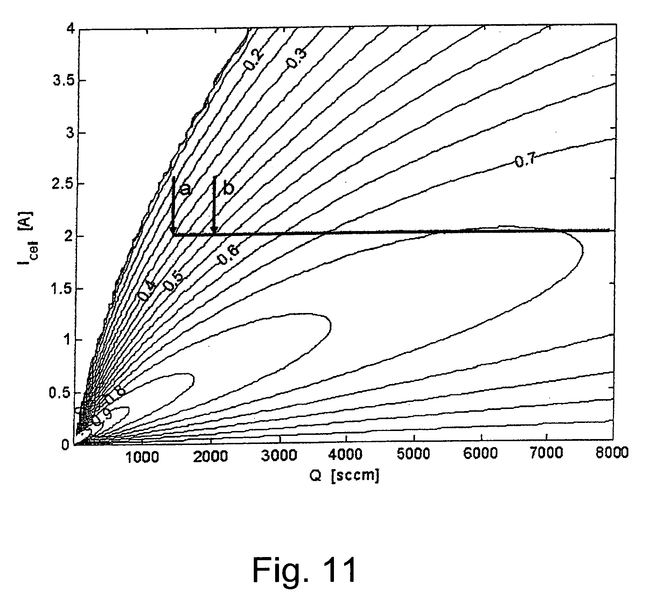

Figur 11 zeigt die relative Feuchte der aus der Brennstoffzelle ausströmenden Luft bei angenommener relativer Umgebungsfeuchte von 50 %. Bei 1400 sccm Luftmenge in den Kathoden, wo eine Temperatur von 70 °C erreicht wird, beträgt die relative Feuchte ca. 35 %, was zum Austrocknen der Brennstoffzelle führen würde (Pfeil a). Die Luftmenge sollte auf mindestens 2000 sccm (Pfeil b) erhöht werden, wo 50 % relative Feuchte erreicht werden. Bei weiterer Erhöhung der Luftmenge und Absenken der Temperatur wird eine maximale Feuchte von ca. 75 % erreicht. In diesem gesamten Bereich kann die Brennstoffzelle sicher betrieben werden. Erst bei Überschreitung von ca. 90 % relative Feuchte besteht die Gefahr von Flutung der Kathoden. Durch die Konstruktion der Brennstoffzelle und das damit eingestellte Luftmengenverhältnis und den Wärmeübergangskoeffizienten wird somit sichergestellt, dass sich immer eine Lüftereinstellung leicht finden lässt, wo das Austrocknen verhindert wird; Flutung ist gar nicht möglich.

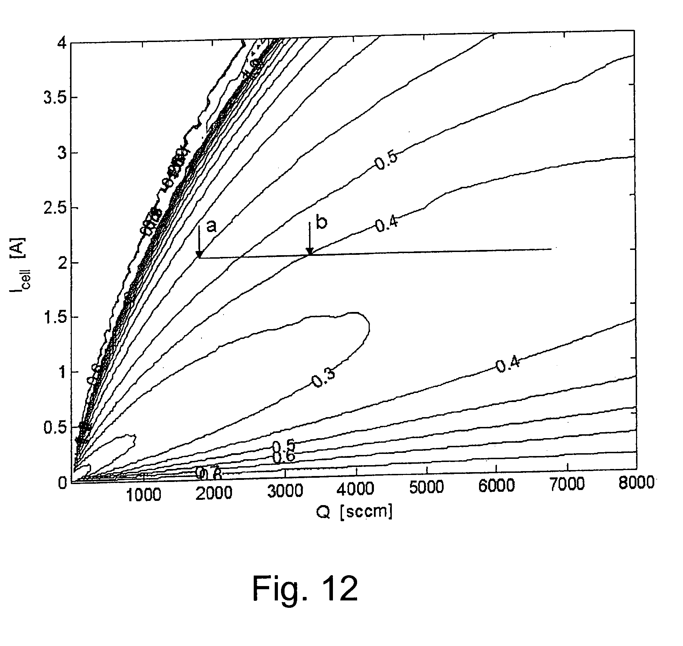

Figur 12 zeigt den spezifischen Widerstand (Ohm*m) der Brennstoffzellenmembran als Funktion der Betriebsparameter. Der spezifische Membranwiderstand ist direkt mit der Feuchte (Figur 9) gekoppelt. Wenn der Luftstrom von ca. 14 sccm auf ca. 3000 sccm verdoppelt wird, kann man den spezifischen Widerstand von 0,6 auf 0,4 Ohm*m reduzieren und somit den Innenwiderstand senken.

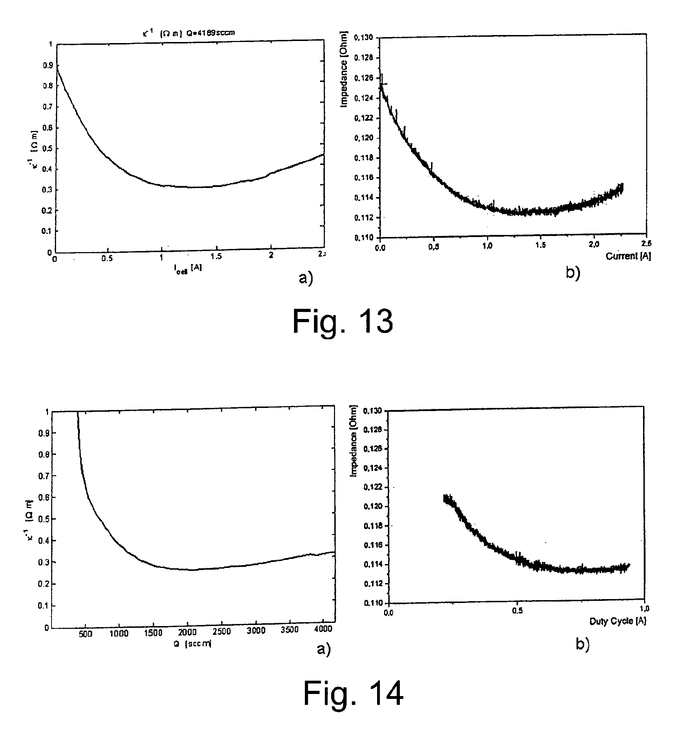

Figuren 13 a) und 13b) zeigen den Verlauf der modellierten Membranleitfähigkeit als Funktion des Stroms bei konstantem Luftstrom von ca. 4200 sccm (a) und die bei 1 kHz gemessene Impedanz einer mittleren Zelle des Brennstoffzellenstacks (b). Man erkennt die gute Übereinstimmung: Es ergibt sich ein Minimum zwischen ca. 1 und 1,5 A.

Figur 14 zeigt den Verlauf der modellierten Membranleitfähigkeit bei konstantem Strom von 910 mA und variiertem Luftstrom und die bei 1 kHz gemessene Impedanz einer mittleren Zelle. Dabei wurde die Lüfterdrehzahl zwischen Maximum (Duty Cycle 1.0) und 20 % variiert. Man erkennt auch hier die gute qualitative Übereinstimmung. Zuerst fällt die Impedanz steil ab, da mit steigender Luft die Kühlung besser wird und die nicht so warme Luft weniger Feuchte entfernt und somit die Zelle weniger trocknet. Dann kommt es zu einem Minimum des Membranwiderstands. Erhöht man die Luftmenge weiter, erhöht sich die Impedanz leicht, da das steigende Luftvolumen wieder mehr Feuchte austragen kann.

### Bezugszeichenliste:

- 1: Brennstoffzellenstack
- 1': Brennstoffzellenstack
- 10: Brennstoffzelle
- 100: Brennstoffzellenanordnung
- 11: Kathodenstromableiter
- 11': Kathodenstromableiter
- 11": Kathodenstromableiter
- 12: Separatorstruktur
- 12': Separatorstruktur
- 120: Kanäle
- 13: Brennstoffverteilerstruktur
- 13': aktiver Bereich der Brennstoffzelle
- 14: Brennstoffverteilerzugänge
- 15: Stromkontaktierfeld
- 16': Verlängerung
- 16 ": in den Kühlkanal ragender Bereich
- 2: Gehäuse
- 20: Kühlkanal
- 21: Kühlkanal
- 22: Einlass
- 23: Einlass
- 24: Auslass
- 25: Auslass
- 26: Vorrichtung zur Veränderung der Querschnittsfläche
- 30: Belüftungseinrichtung
- 31: Lüfter
- 4': Membran-Elektroden-Modul (MEA)

- A: Querschnittsfläche
- B: Querschnittsfläche
- C: Querschnittsfläche
- G: Gasstrom
- G_{'}: Gasstrom
- Q₁: Querschnittsfläche
- Q₂: Querschnittsfläche
- S: Gasstrom

## Patentansprüche

1. Brennstoffzellenanordnung (100) mit
einem Gehäuse (2) mit einer ersten Querschnittsfläche (A) senkrecht zu einer Stackrichtung,
einem in dem Gehäuse angeordneten Brennstoffzellenstack (1') mit mindestens einer Brennstoffzelle (10), welche in der Stackrichtung nacheinander angeordnet eine Anode, eine lonenaustauscheinheit (MEA, 4') und eine Kathode umfasst,
wobei die Brennstoffzelle (10) einen aktiven Bereich (13') mit einer zweiten Querschnittsfläche (C) senkrecht zur Stackrichtung aufweist, welche kleiner als die erste Querschnittsfläche (A) ist,
senkrecht zur Stackrichtung in einer ersten Richtung verlaufende Kathodenkanäle (12) als Separatorstruktur zum kathodenseitigen Gasaustausch angeordnet sind,
und einer Belüftungseinheit (30)
**dadurch gekennzeichnet,**
**dass** ein erster zwischen der mindestens einen Brennstoffzelle und dem Gehäuse in einer zweiten Richtung (x) verlaufender Kühlkanal (20) mit einem Einlass (22) und einem Auslass (24) vorhanden ist und die Kathodenkanäle mit dem ersten Kühlkanal verbunden sind und ein zweiter zwischen der mindestens einen Brennstoffzelle und dem Gehäuse in der zweiten Richtung (x) verlaufender Kühlkanal (21) mit einem Einlass (23) und einem Auslass (25) vorhanden ist, wobei die Belüftungseinheit (30) eingerichtet ist, im ersten Kühlkanal (20) und im zweiten Kühlkanal (21) einen Gasstrom (G, G') derart zu erzeugen, dass im ersten Kühlkanal ein erster Druck und im zweiten Kühlkanal ein zweiter Druck herrscht, wobei die Belüftungseinheit (30) eingerichtet ist, einen durch eine Differenz zwischen dem ersten und dem zweiten Druck bedingten Gasstrom (S) durch die mindestens eine Separatorstruktur (12) zu bewirken.

2. Brennstoffzellenanordnung nach Anspruch 1, **dadurch gekennzeichnet, dass** die Anode mindestens einen ersten Anodenstromableiter aufweist und/oder die Kathode einen ersten Kathodenstromableiter aufweist.

3. Brennstoffzellenanordnung nach einem der Ansprüche 1 oder 2, **dadurch gekennzeichnet, dass** kathodenseitig eine Struktur angeordnet ist,
über die sauerstoffhaltiges Gas zur Kathode führbar ist und/oder über die eine elektrische Ankontaktierung an die Kathode gewährleistet ist.

4. Brennstoffzellenanordnung nach einem der Ansprüche 1 bis 3, **dadurch gekennzeichnet, dass** diese mindestens eine Bipolarplatte enthält.

5. Brennstoffzellenanordnung nach einem der vorhergehenden Ansprüche, **dadurch gekennzeichnet, dass** die Belüftungseinheit (30) eingerichtet ist, die Differenz derart zu erzeugen, dass der Gasstrom (S) durch die mindestens eine Separatorstruktur um einen Faktor zwischen 5 und 1000 kleiner als der Gasstrom (G, G') durch den ersten oder zweiten Kühlkanal ist.

6. Brennstoffzellenanordnung nach einem der vorhergehenden Ansprüche, **dadurch gekennzeichnet, dass** der mindestens eine erste Kathodenstromableiter (11') und/oder der mindestens eine erste Anodenstromableiter in den ersten und/oder zweiten Kühlkanal ragt.

7. Brennstoffzellenanordnung nach einem der vorhergehenden Ansprüche, **dadurch gekennzeichnet, dass** sich der erste und der zweite Kühlkanal auf zwei sich gegenüberliegenden Seiten des Brennstoffzellenstack befinden.

8. Brennstoffzellenanordnung nach einem der vorhergehenden Ansprüche, **dadurch gekennzeichnet, dass** eine senkrecht zur zweiten Richtung verlaufende Querschnittsfläche (Q₁) des ersten Kühlkanals größer als eine Querschnittsfläche (Q₂) des zweiten Kühlkanals ist.

9. Brennstoffzellenanordnung nach einem der vorhergehenden Ansprüche, **dadurch gekennzeichnet, dass** der Einlass (22, 23) und der Auslass (24, 25) des ersten und/oder zweiten Kühlkanals senkrecht zur zweiten Richtung betrachtet unterschiedliche Querschnittsflächen besitzen.

10. Brennstoffzellenanordnung nach einem der vorhergehenden Ansprüche, **dadurch gekennzeichnet, dass** der Einlass (22) und/oder der Auslass (24) Mittel zur Verstellung einer Größe der Querschnittsfläche (26) des Einlasses und/oder Auslasses aufweisen.

11. Brennstoffzellenanordnung nach einem der vorhergehenden Ansprüche, **dadurch gekennzeichnet, dass** die Belüftungseinheit (30) genau einen Lüfter (31) zum Erzeugen eines Gasstroms (G, G') im ersten und/oder im zweiten Kühlkanal (20, 21) aufweist.

12. Brennstoffzellenanordnung nach einem der vorhergehenden Ansprüche, **dadurch gekennzeichnet, dass** deren Bauart DMFC (Direct Methanol Fuel Cell) oder PEMFC (Protone Exchange Membrane Fuel Cell) ist und/oder die mindestens eine Brennstoffzelle (10) eine BiBrennstoffzelle (10) ist und/oder eine Vielzahl von Brennstoffzellen vorhanden ist.

## Claims

1. A fuel cell arrangement (100) with
a housing (2) with a first cross-sectional area (A) perpendicular to a stack direction,
a fuel cell stack (1') which is arranged in the housing and is with at least one fuel cell (10), said fuel cell, arranged successively in the stack direction, comprising an anode, an ion exchange unit (MEA, 4') and a cathode,
wherein the fuel cell (10) comprises an active region (13') with a second cross-sectional area (C) perpendicular to the stack direction, said second cross-sectional area (C) being smaller than the first cross-sectional area (A),
cathode channels (12) as a separator structure for the cathode-side gas exchange are arranged running in a first direction perpendicularly to the stack direction,
and with a ventilation unit (30)
**characterised in**
**that** a first cooling channel (20) with an inlet (22) and with an outlet (24) is present running in a second direction (x) between the at least one fuel cell and the housing, and the cathode channels are connected to the first cooling channel, and a second cooling channel (21) with an inlet (23) and with an outlet (25) is present running in the second direction (x) between the at least one fuel cell and the housing, wherein the ventilation unit (30) is configured to produce a gas flow (G, G') in the first cooling channel (20) and in the second cooling channel (21), in a manner such that a first pressure prevails in the first cooling channel and a second pressure prevails in the second cooling channel, wherein the ventilation unit (30) is configured to effect a gas flow (S) through the at least one separator structure (12), said gas flow being caused by a difference between the first and the second pressure.

2. A fuel cell arrangement according to claim 1, **characterised in that** the anode comprises at least one first anode current collector and/or the cathode comprises a first cathode current collector.

3. A fuel cell arrangement according to one of the claims 1 or 2, **characterised in that** a structure is arranged on the cathode side, via which structure oxygen-containing gas can be led to the cathode and/or via which structure an electrical contacting onto the cathode is ensured

4. A fuel cell arrangement according to one of the claims 1 to 3, **characterised in that** this comprises at least one bipolar plate.

5. A fuel cell arrangement according to one of the preceding claims, **characterised in that** the ventilation unit (30) is configured to produce the difference in a manner such that the gas flow (S) through the at least one separator structure is smaller than the gas flow (G, G') through the first or second cooling channel by a factor between 5 and 1000.

6. A fuel cell arrangement according to one of the preceding claims, **characterised in that** the at least one first cathode current collector (11') and/or the at least one first anode current collector projects into the first and/or second cooling channel.

7. A fuel cell arrangement according to one of the preceding claims, **characterised in that** the first and the second cooling channel are located on two opposite sides of the fuel cell stack.

8. A fuel cell arrangement according to one of the preceding claims, **characterised in that** a cross-sectional area (Q₁) of the first cooling channel which runs perpendicularly to the second direction is larger than a cross-sectional area (Q₂) of the second cooling channel.

9. A fuel cell arrangement according to one of the preceding claims, **characterised in that** the inlet (22, 23) and the outlet (24, 25) of the first and/or second cooling channel have different cross-sectional areas considered perpendicularly to the second direction.

10. A fuel cell arrangement according to one of the preceding claims, **characterised in that** the inlet (22) and/or the outlet (24) comprise means for adjusting a size of the cross-sectional area (26) of the inlet and/or outlet.

11. A fuel cell arrangement according to one of the preceding claims, **characterised in that** the ventilation unit (30) comprises precisely one ventilator for producing a gas flow (G, G') in the first and/or in the second cooling channel (20, 21).

12. A fuel cell arrangement according to one of the preceding claims, **characterised in that** its construction type is DMFC (direct methanol fuel cell) or PEMFC (proton exchange membrane fuel cell) and/or the at least one fuel cell (10) is a bi-fuel cell (10) and/or a plurality of fuel cells is present.

## Revendications

1. Ensemble pile à combustible (100) comprenant
un boîtier (2) ayant une première aire de section transversale (A) perpendiculairement à une direction d'empilage,
un empilage de piles à combustible (1') disposé dans le boîtier, comprenant au moins une pile à combustible (10) qui comprend, disposées successivement dans la direction d'empilage, une anode, une unité d'échange d'ions (MEA, 4') et une cathode,
la pile à combustible (10) possédant une zone active (13') ayant une deuxième aire de section transversale (C), perpendiculairement à la direction d'empilage, qui est plus petite que la première aire de section transversale (A),
des conduits cathodiques (12), qui s'étendent perpendiculairement à la direction d'empilage dans une première direction, faisant office de structure séparatrice pour de l'échange gazeux côté cathode,
et une unité d'aération (30)
**caractérisé en ce que**
un premier conduit de refroidissement (20) qui s'étend entre ladite au moins une pile à combustible et le boîtier dans une deuxième direction (x) est présent, avec une entrée (22) et une sortie (24), et les conduits cathodiques sont reliés au premier conduit de refroidissement, et un deuxième conduit de refroidissement (21) qui s'étend entre ladite au moins une pile à combustible et le boîtier dans la deuxième direction (x) est présent, avec une entrée (23) et une sortie (25), l'unité d'aération (30) étant adaptée pour générer un courant gazeux (G, G') dans le premier conduit de refroidissement (20) et dans le deuxième conduit de refroidissement (21) de telle façon qu'il règne une première pression dans le premier conduit de refroidissement et une deuxième pression dans le deuxième conduit de refroidissement, l'unité d'aération (30) étant adaptée pour créer un courant gazeux (S) résultant d'une différence entre la première et la deuxième pression par le biais de ladite au moins une structure séparatrice (12).

2. Ensemble pile à combustible selon la revendication 1, **caractérisé en ce que** l'anode comporte au moins un premier collecteur de courant anodique et/ou **en ce que** la cathode comporte un premier collecteur de courant cathodique.

3. Ensemble pile à combustible selon la revendication 1 ou la revendication 2, **caractérisé en ce qu'**une structure par le biais de laquelle un gaz contenant de l'oxygène peut être amené à la cathode et/ou par le biais de laquelle un contact électrique avec la cathode est garanti est disposée côté cathode.

4. Ensemble pile à combustible selon l'une des revendications 1 à 3, **caractérisé en ce qu'**il contient au moins une plaque bipolaire.

5. Ensemble pile à combustible selon l'une des revendications précédentes, **caractérisé en ce que** l'unité d'aération (30) est adaptée pour générer la différence de telle manière que le courant gazeux (S) traversant ladite au moins une structure séparatrice est inférieur d'un facteur entre 5 et 1000 au courant gazeux (G, G') qui traverse le premier ou le deuxième conduit de refroidissement.

6. Ensemble pile à combustible selon l'une des revendications précédentes, **caractérisé en ce que** ledit au moins un premier collecteur de courant cathodique (11') et/ou ledit au moins un premier collecteur de courant anodique dépasse dans le premier et/ou dans le deuxième conduit de refroidissement.

7. Ensemble pile à combustible selon l'une des revendications précédentes, **caractérisé en ce que** le premier et le deuxième conduit de refroidissement se trouvent sur deux côtés opposés de l'empilage de piles à combustible.

8. Ensemble pile à combustible selon l'une des revendications précédentes, **caractérisé en ce qu'**une aire de section transversale (Q₁) du premier conduit de refroidissement perpendiculairement à la deuxième direction est plus grande qu'une aire de section transversale (Q₂) du deuxième conduit de refroidissement.

9. Ensemble pile à combustible selon l'une des revendications précédentes, **caractérisé en ce que**, vues perpendiculairement à la deuxième direction, l'entrée (22, 23) et la sortie (24, 25) du premier et/ou du deuxième conduit de refroidissement possèdent des aires de section transversale différentes.

10. Ensemble pile à combustible selon l'une des revendications précédentes, **caractérisé en ce que** l'entrée (22) et/ou la sortie (24) comportent des moyens pour faire varier la grandeur de l'aire de section transversale (26) de l'entrée et/ou de la sortie.

11. Ensemble pile à combustible selon l'une des revendications précédentes, **caractérisé en ce que** l'unité d'aération (30) comporte exactement un ventilateur (31) pour générer un courant gazeux (G, G') dans le premier et/ou dans le deuxième conduit de refroidissement (20, 21).

12. Ensemble pile à combustible selon l'une des revendications précédentes, **caractérisé en ce qu'**il est du type DMFC (pile à combustible à méthanol direct) ou PEMFC (pile à combustible à membrane d'échange de protons) et/ou **en ce que** ladite au moins une pile à combustible (10) est une pile à combustible double (10) et/ou **en ce qu'**une pluralité de piles à combustible est présente.
